# EUROPEAN PATENT APPLICATION

(11) **EP 1 801 014 A1**
(43) Date of publication of application: **27.06.2007**
(21) Application number: 05258032.1
(22) Date of filing: 23.12.2005
(51) Int. Cl.: B65B 25/14, B65B 39/00, B65B 35/58, B65G 47/244

(54) **Cartoning machine**

(71) Applicant: Langenpac N.V., 6600 AK Wijchen (NL)
(72) Inventor: Rovers, Theodorus Johannes Gerardus Maria, Ledeacker (NL)
(74) Representative: Williams, Michael Ian

(57) **Abstract**

A tissue handling apparatus is disclosed for receiving tissue clips (16) and transferring the clips into positions suitable for insertion selectively into flat or cubic tissue cartons. The apparatus comprises a plurality of movable buckets (20) for transferring clips for flat and cubic tissue cartons, the buckets having substantially flat bucket floors.

## Description

The present invention relates to a cartoning machine, and in particular to a tissue cartoning machine for placing stacks, or "clips" of tissues into cartons.

In conventional cartoning machines, stacks of tissues, known as clips, are received and conveyed to the tissue cartons by a bucket conveyor. The cartons are moved adjacent the conveyor in a phased relationship with the clips. Once a clip is adjacent a carton, it is pushed sideways into the carton.

Tissue cartons generally come in two different styles. The first style is known as a regular, rectangular or flat carton. In this style of carton, clips of rectangular tissues are inserted in a substantially flat configuration into the carton. The second style is known as a boutique, cubic or upright carton. In this second style of carton, tissue clips are bent into a U-shape prior to insertion into the carton.

When regular cartons are filled, tissue clips are pushed lengthwise into the carton through an open end of the carton. Thus, it is necessary for regular tissue clips to be orientated on the conveyor with their long side leading. By contrast, when boutique cartons are filled, the clips are bent into a U-shape, and then pushed sideways into an open-sided boutique carton. Thus it is necessary for boutique tissue clips to be oriented on the conveyor with their short side leading.

WO 01/19679 discloses a cartoning machine which can handle both flat and boutique configured clips. According to WO 01/19679 a transfer guide bucket conveyor is provided, which includes a plurality of buckets for transferring the tissue clips to the cartons. Each bucket has a transverse channel in the bucket floor. The channel is narrower than the length of the clips, but wider than the width of the clips.

In the system of WO 01/19679, all clips are initially fed into the buckets so as to span the transverse channels in the bucket floors. Clips which are to be fed into regular cartons are then turned so that they drop into the channels. From there, they are pushed lengthwise into the cartons. Clips which are to be fed into boutique cartons remain spanning the channels, and are pushed down in the middle into the channels to form a U-shape. From this position the U-shape clips are pushed sideways into the boutique cartons.

A problem in the system of WO 01/19679 is that it is not able to handle clips of different widths, without changing the buckets. It may be desirable to handle various sizes of tissue clips, in order to fill cartons of different sizes.

According to the present invention there is provided a tissue handling apparatus for receiving tissue clips and transferring the clips into positions suitable for insertion selectively into flat or cubic tissue cartons, the apparatus comprising a plurality of movable buckets for transferring clips for flat and cubic tissue cartons, the buckets having substantially flat bucket floors.

By providing buckets with substantially flat bucket floors, the present invention may provide the advantage that the apparatus can handle tissue of different widths, since the tissues do not have to be of the same width as a channel in the bucket floor. Furthermore, the present invention may allow a greater degree of flexibility in the length of tissues for boutique cartons, since these tissues do not have to be long enough to span a channel in the bucket floors. Thus the present invention may allow tissues of different sizes to be handled by the same machine.

The apparatus may further comprise means for selectively turning tissue clips for insertion respectively into flat or cubic tissue cartons. Preferably, tissue clips for insertion into flat cartons are rotated through approximately 90° with respect to tissue clips for insertion into cubic cartons. This can allow tissue clips for flat cartons to be inserted lengthways into the cartons, and tissue clips for cubic cartons to be inserted sideways into the cartons.

The turning means may comprise a pusher which is arranged to push against one side only of a tissue clip. This can allow a clip to be turned using a simple mechanism. A plurality of pushers may be provided, and the or each pusher may move in synchronism with a respective bucket.

Each bucket may include an upright member about which a tissue clip can be turned. This can allow the tissue clip to be rotated in the bucket using a single side pusher. Furthermore, since the bucket has a flat floor, a tissue clip is free to rotate about the upright member without impedance.

The upright member may be, for example, a rounded wall, or it could be a post or upright rod. In the case of a post or rod, the post or rod itself may rotate to aid the turning of the clip.

The position of the upright member on the bucket may be adjustable. For example, the bucket and the upright member may be arranged so that the upright member can be slid into different positions, or it may be possible to press or bolt the upright member into different positions. This can allow the bucket to be adapted for tissue clips of different sizes. However in some circumstances it may be possible to keep the upright member in the same position for tissue clips of different sizes.

The apparatus may further comprise a transfer guide for guiding a tissue clip as it is transferred into a carton. This may help to ensure a smooth transfer of the tissue clip into the carton. In addition, the transfer guide may be shaped so as to assist in the bending of a clip for a cubic carton. This may help to ensure that a tissue clip for a cubic carton is fully bent into a U-shape before being inserted into the carton. For example, the transfer guide may have at least one of: side walls which slope outwards; side walls with rounded tops; and side walls which increase in height in the direction of transfer of a clip into a carton.

Preferably a plurality of transfer guides are provided each of which moves in synchronism with a bucket.

In some embodiments the transfer guide itself may provide the main means for bending a tissue clip into a U-shape, and thus the apparatus may be arranged such that at least some tissues in a tissue clip are substantially flat before the tissue clip enters the transfer guide. This may reduce the complexity of the apparatus, in comparison to the situation where pre-bending occurs.

The apparatus may further comprise a folding knife for bending clips for cubic cartons. The folding knife may act in combination with a transfer guide to bend a clip for a cubic carton into a U-shape. The folding knife may press against a tissue clip before or as the clip passes into a transfer guide. The folding knife may cause some of the upper tissues in the tissue clip to bend before insertion into the transfer guide, but does not necessarily provide any substantial pre-bending of the whole tissue clip.

The apparatus may further comprise a compression plate for compressing clips for flat cartons. This may assist with the insertion of tissue clips into flat cartons.

The compression plate may have side walls, which may help to ensure that the tissue clip is correctly aligned as it is inserted into the carton. Where side walls are provided, the spacing of the side walls preferably corresponds to the width of a tissue clip. The height of the side walls may be approximately the same as or slightly less than that of a compressed clip, or some other height. In order to allow tissue clips of different sizes to be used, the side walls may be adjustable, and/or the compression plate may be removable. However, in some embodiments the compression plate is flat and no side walls are provided.

According to another aspect of the invention there is provided a method of transferring tissue clips into positions suitable for insertion selectively into flat or cubic tissue cartons, the method comprising transferring the tissue clips in a plurality of moving buckets, the buckets having substantially flat bucket floors.

Any of the apparatus features may also be provided as method features, and *vice versa.*

Preferred features of the present invention will now be described, purely by way of example, with reference to the accompanying drawings, in which:
Figure 1 shows an overview of a cartoning machine according to an embodiment of the invention;
Figure 2 shows parts of a bucket for conveying a tissue clip;
Figure 3 shows parts of a turning unit;
Figure 4 shows parts of a cartoning unit;
Figure 5 shows the shape of a transfer guide; and
Figure 6 shows parts of a compression plate for compressing regular clips.

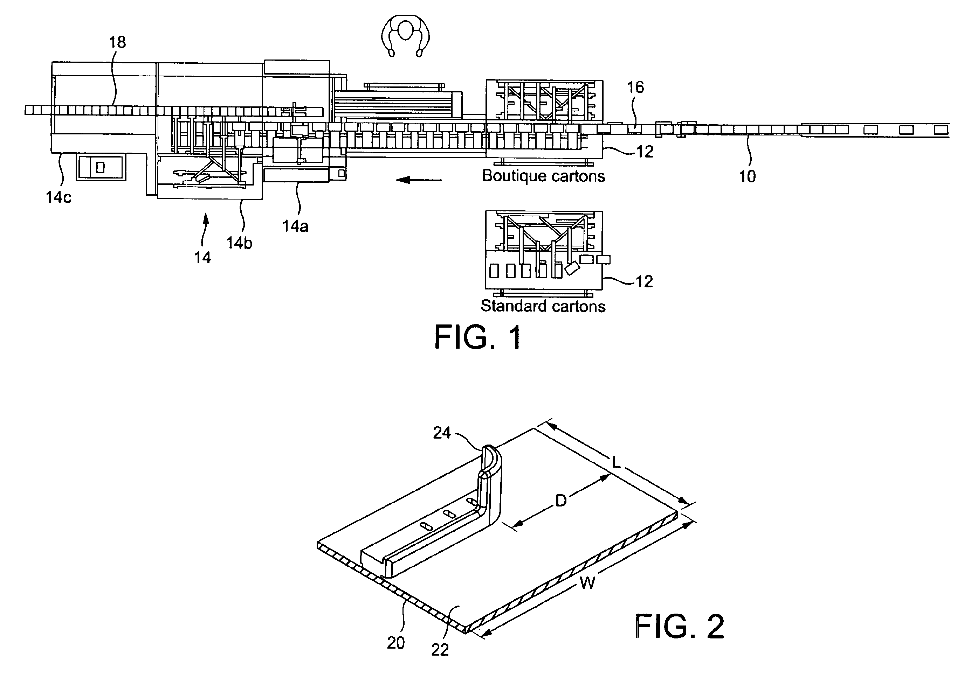

Figure 1 shows an overview of a cartoning machine according to an embodiment of the invention. Referring to Figure 1, clips of tissues 16 are received on conveyor 10, which moves from right to left in Figure 1. The conveyor 10 consists of a number of buckets mounted on chains, with one bucket being provided for each clip 16. The tissue clips 16 are transferred by conveyor 10 to turning unit 12. In turning unit 12 the clips are selectively turned, depending on whether they are for regular cartons or boutique cartons. Clips which are for regular cartons are turned through 90°, while clips which are for boutique cartons are not turned.

From turning unit 12 the clips 16 are conveyed to cartoning unit 14. The cartoning unit 14 includes a second conveyor 18 which runs parallel to the conveyor 10. The second conveyor 18 conveys cartons which are to be filled with the tissue clips. In a first part 14a of cartoning unit 14 the cartons are inserted onto the second conveyor 18. In a second part 14b of cartoning unit 14 the clips are pushed into the cartons. In a third part 14c of the cartoning unit the filled cartons are sealed and discharged.

Figure 2 shows parts of a bucket 20 for conveying a clip 16. Referring to Figure 2, the bucket 20 has a flat bucket floor 22 for supporting a clip. The bucket floor has a length L and width W each of which are approximately equal to the length of the largest clip that is to be carried by the bucket. Mounted on the bucket floor is a rounded wall 24. The distance D between the end of the rounded wall 24 and the edge of the bucket is approximately equal to the width of the largest clip that is to be carried by the bucket.

The bucket 20 shown in Figure 2 offers a high degree of flexibility in terms of the size of clips that can be carried. The size of the bucket is determined by the size of the largest tissue clips which are to be carried. However smaller sized tissue clips can be carried with little or no modification to the bucket 20.

If required, the position of the rounded wall 24 can be adjusted for clips of different sizes. For example, the rounded wall 24 for slide into a different position for clips of different sizes, or it may be screwed into different positions for clips of different sizes.

The bucket 20 is mounted on two chains (not shown) which move the bucket in the machine direction. In Figure 2 the machine direction is from left to right. In operation, clips are initially placed on the bucket with their short side leading. If the clips are to be inserted into regular cartons, then they are turned through 90° so that their long side is leading, while if they are to be inserted into boutique cartons they are not turned.

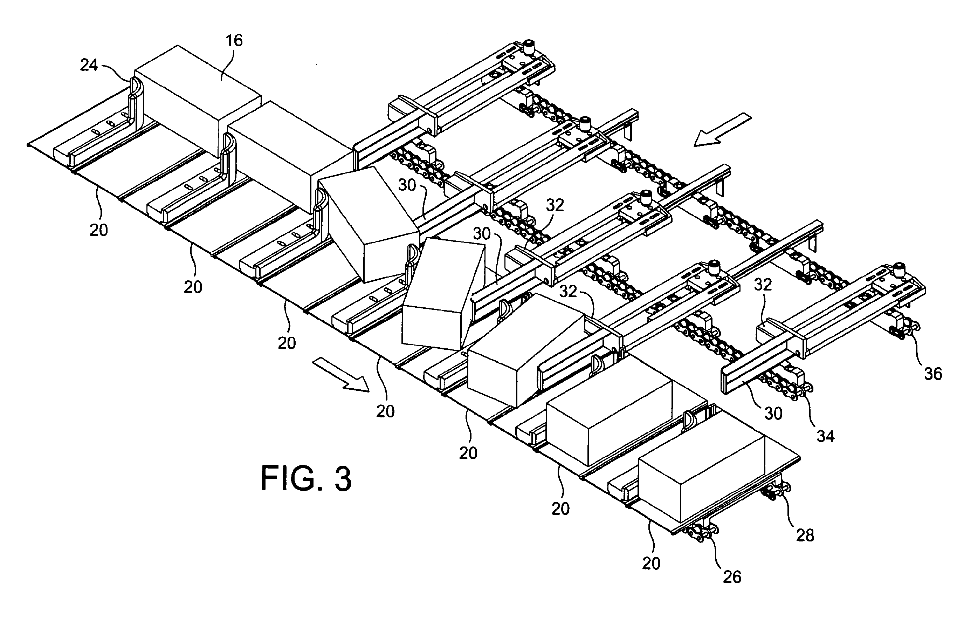

Figure 3 shows parts of a turning unit 12. In Figure 3, the turning unit is configured to turn tissue clips through 90°, so that they are in an orientation suitable for insertion into a regular carton. In Figure 3, the buckets 20 are mounted on chains 26, 28, which convey the buckets from left to right. A number of pushers 30 are mounted on chains 34, 36. The chains 34, 36 convey the pushers 30 in a direction parallel to the buckets 20, so that the pushers 30 move in synchronism with the buckets 20.

Referring to Figure 3, clips 16 are initially received on buckets 20 with their short edge leading. In this orientation, each clip is located with a long edge lying against the end of a rounded wall 24. As a clip 16 moves through the turning unit, a pusher 30 begins to push one side of the clip at a point towards the end of the clip. This causes the clip to start turning about the rounded wall 24. As the amount of turning approaches 90°, the pusher 30 moves alongside the clip, parallel to its long edge. This completes the turning of the clip through 90°, and ensures that the clip is correctly aligned with its long edge leading.

The pusher 30 is provided with an end stop 32, which contacts the short edge of the clip when the pusher is fully extended. This ensures the correct alignment of the clip in the direction perpendicular to the direction of travel.

The pusher 30 then withdraws, and the clip is conveyed onwards towards the cartoning unit.

When the cartoning machine is configured for boutique cartons, the pushers 30 are disabled, and the tissue clips 16 pass through the turning unit without being turned.

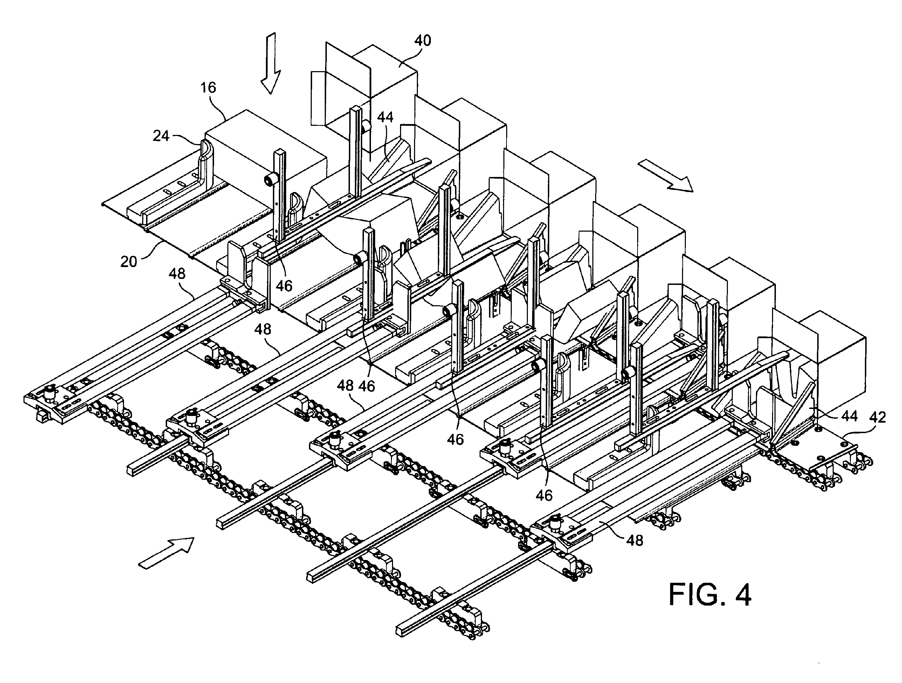

Figure 4 shows parts of a cartoning unit 14. The cartoning unit of Figure 4 is configured for filling boutique style tissue cartons.

Referring to Figure 4, tissue clips 16 for boutique cartons are received in the cartoning unit with their short edge leading, and are transferred in the machine direction on buckets 20. A second conveyor is provided which runs in the machine direction parallel to the buckets 20, and which transfers the tissue cartons 40. A third conveyor 42 is located between buckets 20 and cartons 40, and moves in synchronism with the buckets and cartons. The third conveyor 42 carries transfer guides 44, which are used to assist in the transfer of the clips 16 between the buckets 20 and the cartons 40.

The cartoning unit includes a plurality of folding knives 46 which are located above the clips and which move in the machine direction in synchronism with the clips 16. A plurality of pushers 48 are located to one side of the clips 16, and also move in the machine direction in synchronism with the clips.

As a clip 16 moves through the cartoning unit, a folding knife 46 descends across the middle of the clip, causing the clip to start bending. As the clip bends, a pusher 48 moves towards the clip, and starts pushing it in the direction of the corresponding transfer guide 44. The transfer guides 44 are arranged with rounded and sloping walls. As the pusher 48 pushes the tissue clip into the transfer guide 44, the sloped walls of the transfer guide 44, in combination with the folding knife 46, cause the tissue clip 16 to bend into a U-shape. The U-shaped tissue clip is then pushed through the transfer guide 44 and into the carton 40. The filled carton is then transferred to the next section of the machine for sealing and discharge.

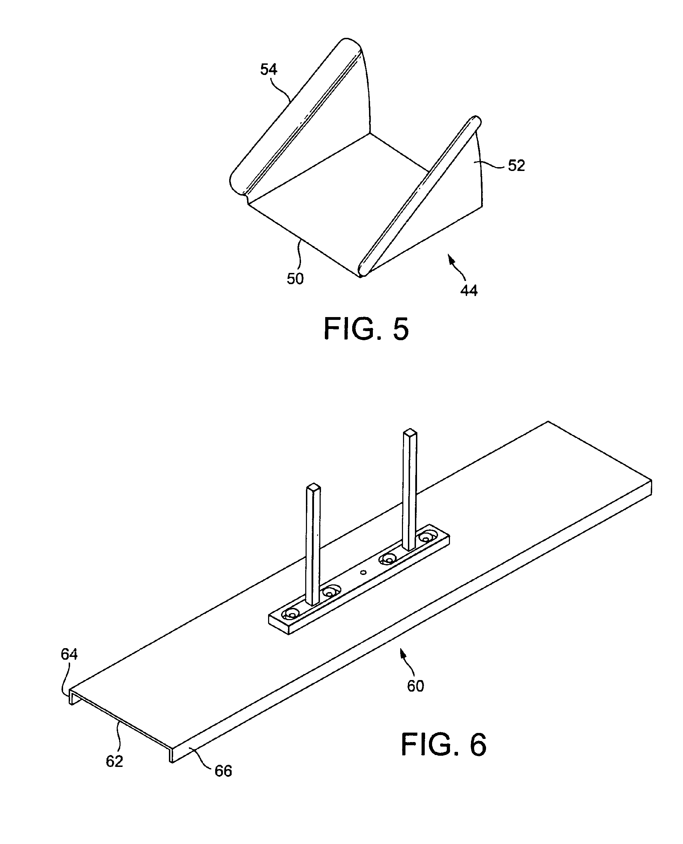

Figure 5 shows the shape of a transfer guide 44. The transfer guide 44 has a floor 50 and two side walls 52, 54. The tops of the side walls are rounded, and slope upwards in the direction of movement of the clips into the cartons. In addition, each of the side walls slopes outwards to a certain extent. This shape assists in the bending of the boutique clips into a U-shape.

The sloped walls of the transfer guides 44 can allow tissue clips of different lengths to be bent into a U-shape without requiring modification. However in some circumstances it may be preferred to replace the transfer guides 44 with guides of different dimensions when different sized tissues are to be used. Since relatively few transfer guides are used, in comparison with the number of buckets, this is a modification which can be made relatively quickly and easily.

When the cartoning unit is configured for filling regular cartons the folding knifes 46 are replaced with compression plates. In this configuration the tissue clips are received with their long edge leading. As a tissue clip passes through the cartoning unit, a compression plate descends and compresses the clip. A pusher 48 then pushes the compressed clip through the corresponding transfer guide 44 and into a regular carton.

Figure 6 shows parts of a compression plate for compressing regular clips. The compression plate 60 includes an inside surface 62 which is pressed down on the clips in order to compress them. The compression plate 60 also includes side walls 64, 66. The side walls 64, 66 ensure that the clip stays in the correct orientation as it is pushed by the pusher 48 into the carton. The side walls shown in Figure 6 are exemplary, and side walls of various different heights may be used.

The side walls of the compression plate 60 are spaced at a distance which corresponds to the width of a tissue clip. If a tissue clip of a different size is to be used, then the compression plate is replaced with one having the appropriate spacing between the side walls. However, since relatively few compression plates are used in the machine, this is a modification which can be made quickly and easily. Alternatively compression plates having no side walls could be used for various different sizes of tissues.

The cartoning apparatus described above offers a high degree of flexibility in terms of the size of tissue clips that can be handled. In particular, it is not necessary for regular tissue clips to fit into a channel in the bucket floor, nor is it necessary for boutique tissue clips to span a channel. This can allow tissue cartons of various sizes to be filled with tissue clips of various sizes with little or no modification to the machine.

## Claims

1. A tissue handling apparatus for receiving tissue clips and transferring the clips into positions suitable for insertion selectively into flat or cubic tissue cartons, the apparatus comprising a plurality of movable buckets for transferring clips for flat and cubic tissue cartons, the buckets having substantially flat bucket floors.

2. Apparatus according to claim 1, further comprising means for selectively turning tissue clips for insertion respectively into flat or cubic tissue cartons.

3. Apparatus according to claim 2, wherein tissue clips for insertion into flat cartons are rotated through approximately 90° with respect to tissue clips for insertion into cubic cartons.

4. Apparatus according to claim 2 or 3, wherein the turning means comprises a pusher which is arranged to push against one side only of a tissue clip.

5. Apparatus according to any of the preceding claims, wherein each bucket includes an upright member about which a tissue clip can be turned.

6. Apparatus according to claim 5, wherein the upright member comprises a rounded wall.

7. Apparatus according to claim 5 or 6 wherein the position of the upright member on the bucket is adjustable.

8. Apparatus according to any of the preceding claims, further comprising a transfer guide for guiding a tissue clip as it is transferred into a carton.

9. Apparatus according to claim 8, wherein the transfer guide is shaped so as to assist in the bending of a clip for a cubic carton.

10. Apparatus according to claim 8 or 9, wherein the transfer guide has at least one of: side walls which slope outwards; side walls with rounded tops; and side walls which increase in height in the direction of transfer of a clip into a carton.

11. Apparatus according to any of claims 8 to 10, wherein a plurality of transfer guides are provided each of which moves in synchronism with a bucket.

12. Apparatus according to any of claims 8 to 11, wherein the apparatus is arranged such that at least some tissues in a tissue clip are substantially flat before the tissue clip enters the transfer guide.

13. Apparatus according to any of the preceding claims, further comprising a folding knife for bending clips for cubic cartons.

14. Apparatus according to any of the preceding claims, further comprising a compression plate for compressing clips for flat cartons.

15. Apparatus according to claim 14 wherein the compression plate has side walls.

16. A method of transferring tissue clips into positions suitable for insertion selectively into flat or cubic tissue cartons, the method comprising transferring the tissue clips in a plurality of moving buckets, the buckets having substantially flat bucket floors.
